# EUROPEAN PATENT APPLICATION

(11) **EP 4 838 086 A1**
(43) Date of publication of application: **11.11.2026**
(21) Application number: 25175079.0
(22) Date of filing: 08.05.2025
(51) Int. Cl.: F03D 1/00, F03D 13/10, F03D 80/80

(54) **NACELLE FOR A WIND TURBINE AND METHOD OF INSTALLING THE NACELLE**

(71) Applicant: Nordex Energy SE & Co. KG, 22419 Hamburg (DE)
(72) Inventor: Wackrow, Torsten, 22419 Hamburg (DE); Ortelt, Andreas, 22419 Hamburg (DE)
(74) Representative: Epping - Hermann - Fischer

(57) **Abstract**

The present disclosure relates to a nacelle (106) for a wind turbine (100), comprising:
- a first nacelle compartment (200),
- a second nacelle compartment (202), and
- a third nacelle compartment (204),

wherein, the second nacelle compartment (202) is attached beneath the first nacelle compartment (200) and to the first nacelle compartment (200), and
the third nacelle compartment (204) is attached to at least one of the first nacelle compartment (200), the second nacelle compartment (202), and an intersection (206) between the first and the second nacelle compartments (200, 202),
wherein the first nacelle compartment (200) is configured to accommodate at least an electrical generator, and
wherein the second nacelle compartment (202) is configured to at least accommodate one of a power converter or a transformer, and
wherein the third nacelle compartment (204) is configured to at least accommodate the other of the power converter and the transformer.

The invention further relates to a method for installing the nacelle.

## Description

The present disclosure relates to a nacelle for a wind turbine and method of installing the nacelle.

Wind turbines are widely known from the prior art and are used to convert wind energy into electrical energy.

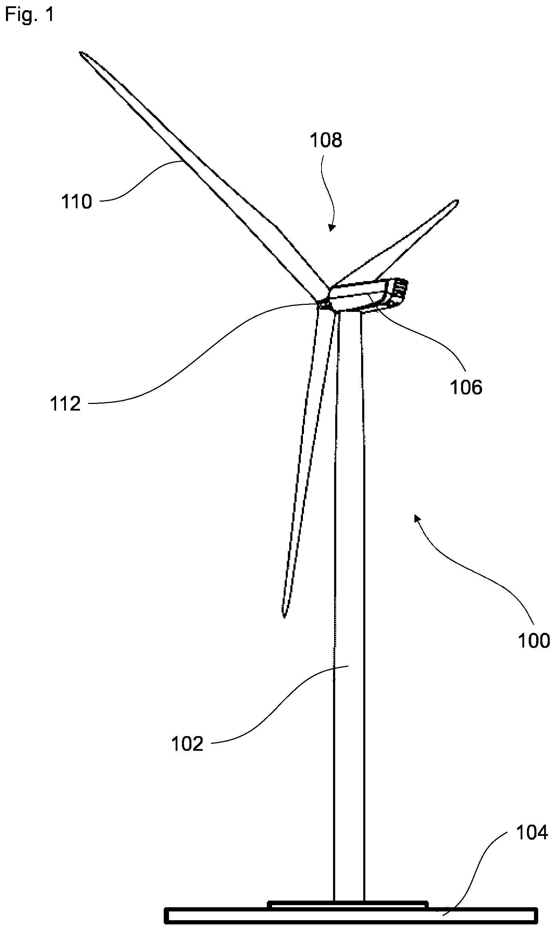

Figure 1 shows a schematic view of a wind turbine 100, which comprises a tower 102. The tower 102 is fixed to the ground by means of a foundation 104. At one end of the tower 102, opposite to the ground, a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an air flow, for example wind interacting with the blades 110 resulting in forces getting exerted on the blades 110. This rotational movement is transmitted to the generator via the transmission supporting the rotor shaft, with or without a gearbox. The generator converts the mechanical energy of the rotor 108 into electrical energy.

Electrical equipment, e.g., a generator, a transformer, a converter and so on, may be placed close to the rotor 108 and inside the nacelle 106 to keep mechanical and electrical transmission losses low and to protect the equipment from environmental influences. The mounting of relatively heavy equipment at an elevated position (hub height) requires a strong and relatively stiff mounting structure to be attached at the upper end of the tower 102. Besides, the mounting structure serves as a principal foundation structure for the entire nacelle, inside of which said heavy equipment, e.g., electrical equipment, transmission train, etc., are accommodated. Thus, the nacelle constructed around the mounting structure is required to meet certain design requirements, e.g., to provide ample interior space and freedom to allow movement of personnel, equipment, machines, tools, etc., with ease, without causing any hindrances. Other factors associated with the nacelle such as weight, compactness in the installed/operating conditions, flexibility to allow increase or decrease of volume depending on certain operating and non-operating conditions, allowability of additional components to be attached (e.g., on the exterior), etc., also need to be factored in while designing and assembling the nacelle.

As the size of wind turbines and their associated sub-assemblies grows due to ever increasing demand for renewable energy, there is a continuous need for improved wind turbine nacelles. Particularly, the modularity concept of the nacelle is gaining increased attention in the last few years. A modular nacelle allows wind turbine components to be segregated into multiple smaller modules which, thereby, provides numerous benefits.

It is an object of the invention to provide an improved nacelle for a wind turbine and a method of installing the nacelle.

The present disclosure relates to a nacelle for a wind turbine, comprising:
a first nacelle compartment,
a second nacelle compartment, and
a third nacelle compartment.

The second nacelle compartment is attached beneath the first nacelle compartment and to the first nacelle compartment. The third nacelle compartment is attached to at least one of the first nacelle compartment, the second nacelle compartment, and an intersection between the first and the second nacelle compartments. The first nacelle compartment is configured to accommodate at least an electrical generator, and the second nacelle compartment is configured to at least accommodate one of a power converter or a transformer. The third nacelle compartment is configured to at least accommodate the other of the power converter and transformer.

A nacelle compartment, alternately and interchangeably referred to as a "nacelle module" throughout the disclosure, should be understood as follows. A nacelle compartment is, according to an example, an enclosure or an encasement or a closed receptacle which is structurally built or assembled around a supporting reinforcing structure, for example, including but not limited to an open framework, or a closed framework or a structural skeleton.

The supporting reinforcing structure may be referenced by alternate designations, such as a rear frame, a generator frame, a rear support structure, a support carrier, and so on.

The terms enclosure or encasement or a receptacle in a broader sense may refer to a closed envelope or a cover with a hollow space inside to receive and contain something. In the context of wind turbines, the nacelle module or the nacelle compartment refers to such an enclosure or an encasement or a receptacle defining a hollow interior and capable of receiving and containing several equipment, sub-assemblies and systems forming the part of the wind turbine. Examples of such equipment, sub-assemblies and systems include, but not limited to a transmission train, machine carrier, yaw drives, a generator, a power converter, a cabinet, a transformer, a cooling system, a cabling system, a piping system, a crane, etc.

An open framework defined above may be, for example, a pair of simple, elongated beams arranged and/or connected in a parallel relationship, or a platform (e.g., planar) serving as a base or foundation for building the nacelle compartment. This open framework may be configured to support equipment on top, e.g., a generator, a power converter, a transformer, a cooling system, etc., of the wind turbine, or at the bottom. A closed framework, on the other hand, may include a base (or foundation), optionally a roof, and one or more side frames or side supports around which the nacelle compartment is built or assembled. The base, the (optional) roof and one or more side frames/side supports may be formed, for example, as a cluster or a matrix of interconnected beams or trusses.

A nacelle compartment, including the supporting reinforcing structure within it, is designed to protect several sophisticated and expensive components, systems or subassemblies of the wind turbine against external factors such as wind gusts, rain storms, extreme heat/solar radiation, snow, lightning, and so on.

Such a compartment may accommodate and carry the above-outlined components, systems or subassemblies during both operating and non-operating conditions.

Non-operating conditions include, but are not limited to, storage, transportation, lifting from the ground during installation, lowering from the tower onto ground for replacement, a state of shutdown during emergency conditions, inspection, repair, maintenance, etc.

Operating condition is a normal operating state of a wind turbine, which,in a general sense is characterized by an installed condition of the wind turbine on top of the tower with the components, systems, or subassemblies being contained in place inside the nacelle compartment and operating harmoniously to generate power i.e., transformation of available wind energy into mechanical power and finally into electrical power.

In the present disclosure, the following notations are used to denote spatial orientations, positions, extensions, etc.,: 'above'/'top'/'upper' and
'beneath'/'bottom'/'lower'/'underneath' refer to or is referenced to a vertical direction with respect to ground. The vertical direction corresponds essentially to the length direction of the tower (height considered from the foundation till the head of tower flange on which the nacelle is supported) which is inherently vertical. In the operating condition, the second nacelle compartment is attached beneath the first nacelle compartment, such that the second nacelle compartment is relatively closer to the ground than the first nacelle compartment. The height of an entire nacelle or a nacelle compartment is a dimension of the nacelle measured in the vertical direction from its bottom to the top.

'Front'/'fore' and 'rear'/'aft'/'trail' are referenced to a lengthwise or longitudinal direction which extends horizontally, i.e., essentially perpendicular to the vertical direction defined above. Lengthwise or longitudinal direction can alternately be attributed as the length direction of a main shaft of the wind turbine to which the rotor is attached. In still another case, the lengthwise direction or the longitudinal direction may be referenced to a linear direction from the nose cone of the rotor (spinner) to the extremity of the nacelle farthest away from the rotor.

Length of the nacelle refers to a dimension of the nacelle in the lengthwise direction. Front side (or front end or fore end, all referred to interchangeably in the disclosure) of the nacelle is the side at which the rotor is attached. The rear side (or rear end or trailing end, all referred to interchangeably in the disclosure) of the nacelle is opposite to the front side of the nacelle in the length direction. A 'width' or 'widthwise direction' or 'lateral direction' of the nacelle is the third direction which extends in a direction perpendicular to both the lengthwise or longitudinal (horizontal) direction and height (vertical) direction of the nacelle.

According to a further embodiment, the third nacelle compartment is arranged at a rear end and configured to extend beyond the rear end of at least one of the first nacelle compartment and the second nacelle compartment. "Rear end", as referenced before, means the opposite side of the fore end or the front end of the nacelle where the rotor is attached.

Extend beyond the rear end refers to an extension in at least one of 'width or widthwise direction', 'lengthwise or longitudinal direction' and 'height or vertical direction' outlined above relative to the rear end.

In some embodiments, the third nacelle compartment configured to extend beyond the rear end refers to an extension of the third nacelle compartment preferably in 'width or widthwise direction' as well as 'lengthwise or longitudinal direction', and more preferably at least in the 'lengthwise or longitudinal direction'.

Considering the example of an upwind wind turbine, "Fore end" of the nacelle is the windward direction of the nacelle, while "rear end" is opposite to the fore end and is a leeward direction of the nacelle, and therefore the opposite side to the rotor. In the example of downwind wind turbine, windward and leeward directions are reversed in comparison to upwind wind turbine.

According to one example, an overall length (dimension) of the entire nacelle (e.g., in operating and/or non-operating condition) referenced to or attributed to the 'lengthwise or longitudinal direction' may be the length of the third nacelle compartment plus the length of the first or the second nacelle compartment.

Such an arrangement where the third nacelle compartment extends beyond the rear end allows the third nacelle compartment to be independently and separately attached to at least one of the first nacelle compartment, the second nacelle compartment, and an intersection between the first and the second nacelle compartments. This provides greater extent of flexibility and freedom to customize the size, shape, attachment or assembly, overall design, mechanical and/or structural properties, etc., of the third nacelle compartment resulting in enhanced degree of modularity.

Furthermore, the accessibility of the third nacelle compartment arranged at the rear end is improved. For example, if the third nacelle compartment is attached at the rear end of the second nacelle compartment such that the third nacelle compartment extends beyond the rear end, access to the third nacelle compartment may be attained via the rear end of the second nacelle compartment, and/or the rear end of the first nacelle compartment, from the roof or lateral sides of the first nacelle compartment, from the base or lateral sides of the first nacelle compartment.

According to one example, an underside of the second nacelle compartment may be provided with a hatch or a grill which may be opened, e.g., by means of hinges so that the hatch or the grill may serve as a platform, e.g., in the form of a ramp, leading to the third nacelle compartment. This allows movement of personnel, tools, etc., between the second and third nacelle compartments. Similar hatches or grills or platforms of any kind may be provided on other faces or walls, e.g., lateral side walls of the second as well as the first nacelle compartments that may lead to or provide access to the third nacelle compartment.

According to an embodiment, only one side, preferably a frontal side of the third nacelle compartment is exposed or is configured to form an interface with or is configured to be in close proximity with the rear end of at least one of the first nacelle compartment, the second nacelle compartment, and the intersection between the first and the second nacelle compartments. In other words, all the other sides like lateral sides, top side, rear side and bottom side of the third nacelle compartment may be free i.e., do not form an interface with or lie in close proximity with any of the sides or walls or faces belonging to at least one of the first nacelle compartment, the second nacelle compartment, and the intersection between the first and the second nacelle compartments.

In an example, the top side (or surface or roof) of the third nacelle compartment comprises suitable provisions or arrangements to support the further component on top, for example, the cooling and/or sensing arrangement. However, it is preferable that the top side (roof or surface) of the third nacelle compartment has at least some portion of free area serving as a platform for movement of personnel, tools, machines, etc.

According to one example, the further component is supported on top of the third nacelle compartment at a predefined height, so that a vertical gap or passage may be formed to allow movement and/or for gaining access into the third nacelle compartment from its top.

In an example where the third nacelle compartment is attached to the intersection between the first and the second nacelle compartments so as to extend beyond the rear end, a portion of height of the third nacelle compartment may extend above the intersection, while a remaining portion may extend below the intersection.

According to an example, the second nacelle compartment being a lower nacelle compartment is attached to the tower, such that the second nacelle compartment supports the first nacelle compartment (the first nacelle compartment being the upper nacelle compartment) on the top, and the third nacelle compartment at the rear end. Thus, the second nacelle compartment may be a main (or a standalone) nacelle compartment and may be configured to support the other nacelle compartments i.e., the first and the third nacelle compartments.

The second nacelle compartment, in one example, accommodates a main frame or a machine carrier that supports the drive train, with the drive train residing in the first nacelle compartment attached on top of the second nacelle compartment. The main frame or the machine carrier may be attached to the tower through yawing arrangement.

The third nacelle compartment is configured to at least accommodate the power converter or the transformer and arranging this third nacelle compartment at the rear end and extending beyond the rear end of the first or the second nacelle compartment improves the cooling, e.g., by natural convective cooling of the third nacelle compartment and the components accommodated therein.

According to an embodiment, the convective (e.g., natural) cooling of the third nacelle compartment may be optimized, for example, by enhancing aerodynamic characteristics around the first and/or the second and/or the third nacelle compartments, so that flow of air effectuating the convective heat removal from the third nacelle compartment may be enhanced.

Dedicated forced convective cooling may also be possibly provided for cooling the third nacelle compartment.

Thus, load on the cooling system, e.g., a passive cooling system of the wind turbine may be reduced.

According to a further embodiment, the third nacelle compartment is arranged at a predefined distance from the rear end of the at least one of the first nacelle compartment and the second nacelle compartment. The predefined distance between the third nacelle compartment and the first or second nacelle compartment provides the advantage that cooling is further improved as the air can circulate around the third nacelle compartment. Further, safety is improved as the third nacelle compartment is better protected from arc flashes.

According to an example, arranging the third nacelle compartment at the predefined distance from the rear end of the at least one of the first nacelle compartment and the second nacelle compartment may facilitate supporting or guiding or maneuvering of certain equipment, tools, etc. For example, a rope or a cable suspended from or supported by the support structure may be guided through the predefined distance, so that lifting or lowering of certain components may be facilitated.

According to another embodiment, the nacelle comprises a support structure extending from a rear end of at least one of the first nacelle compartment, the second nacelle compartment and the intersection between the first and the second nacelle compartments, and the third nacelle compartment is attached to the support structure.

Preferably, the support structure is configured to support further components on top, in particular at least one of a cooling arrangement and a sensing arrangement of the wind turbine. The cooling arrangement and the sensing arrangement are conventionally installed on top of the nacelle or on the sides of the nacelle. Installing them on the top side of the support structure provides the advantage that the cooling arrangement and/or the sensing arrangement can be transported to the installation site preinstalled on the support structure as one module.

According to a further embodiment, the support structure is configured to support, at its bottom side, the transformer or power converter accommodated in the third nacelle compartment.

This way, the support structure supporting the further components, e.g., cooling and/or sensing arrangement, as well as the third nacelle compartment housing the transformer or the power converter leads to enhanced modularity.

Further, heat generating components like transformer or power converter accommodated inside an essentially separate third nacelle module reduces or prevents heat dissipation of these components into the first and the second nacelle modules.

Furthermore, the inspection, repair, replacement, or maintenance pertaining to cooling and/or sensing arrangement, as well as the transformer or the power converter which are essentially attached separately (distantly) from the other components inside the first and/or second nacelle compartments, can be carried out in a much convenient, safer and time-efficient manner.

According to an embodiment, the support structure supporting the third nacelle compartment (containing either the power converter or the transformer) as well as the further component(s), e.g., cooling and/or sensing arrangement, may constitute a single module, which, for instance, may collectively be referred to as a 'rear module'. Such a rear module may be transported (on road, ship, etc.,) individually or independently.

According to another embodiment, the rear module can be transported (on road, ship, etc.,) together with the first and/or second nacelle compartments.

According to another embodiment, the rear module attached at one position at the rear end may be shifted (or offset) vertically and attached at any other position along the height of the first nacelle compartment and the second nacelle compartment. For example, consider a first position where the rear module is attached to the rear end of the second nacelle compartment or at the intersection between the first and the second nacelle compartments. In this position, the third nacelle compartment is behind the second nacelle compartment while the further component(s) supported above the third nacelle compartment lies behind (at least partly) the first nacelle compartment when viewed from the rotor side or fore end. The entire rear module may be detached from this first position and shifted/offset to, say, a second position which is much higher or elevated or above the first position.

In the new, second position, the further component(s) may extend above (or beyond) a roof of the first nacelle compartment and get exposed to incoming wind flowing over the roof, while the third nacelle compartment may still remain behind the first and/or second nacelle compartments.

This way, flexibility and freedom in terms of movement/offset as well as attachment of the third nacelle compartment at any desired position in the vertical direction may be realized.

According to a further embodiment, at least one of the first nacelle compartment and the second nacelle compartment comprises an opening configured to provide access to the third nacelle compartment.

For example, the first nacelle compartment allows access to the top of the third nacelle compartment via the opening(s) provided e.g., at the rear, and the second nacelle compartment allows access to the sides of the third nacelle compartment via the opening(s) provided e.g., at the lateral sides.

The opening in the first nacelle compartment provides access to the third nacelle compartment via the support structure, and the opening on the rear side of the second nacelle compartment provides direct access to the third nacelle compartment.

According to a further embodiment, the nacelle defines a widthwise direction,
- the first nacelle compartment has a first width extension in the widthwise direction,
- the second nacelle compartment has a second width extension in the widthwise direction, wherein the second extension is substantially equal to the first extension, and
- the third nacelle compartment has a third width extension in the widthwise direction, wherein the third width extension is different from at least one of the first width extension and the second width extension.

Preferably, the third width extension is larger than the first width extension and the second width extension, which enables the third compartment to be built larger and also the cooling module to be arranged, for example, in the unfolded working position beside the sidewalls of the nacelle.

According to a further embodiment, the nacelle defines a lengthwise direction and a widthwise direction,
- the first nacelle compartment has a first length extension in the lengthwise direction, and a first width extension in the widthwise direction,
- the second nacelle compartment has a second length extension in the lengthwise direction, and a second width extension in the widthwise direction, and
- the third nacelle compartment has a third length extension in the lengthwise direction, and a third width extension in the widthwise direction.

The first, the second and the third length extensions are different from each other and the first, the second and the third width extensions are different from each other such that during at least the non-operational state, in particular during transportation and/or storage, such that at least one of:
- the third nacelle compartment is configured to be accommodated in either of the first and second nacelle compartments, and
- one of the first and second nacelle compartments is configured be accommodated within the other of the first and second nacelle compartments.

According to a further aspect of the present disclosure, the invention relates to a method of installing the nacelle, as explained above, on top of a tower of the wind turbine. The installation method comprises the following steps:
- lifting the second nacelle compartment on top of the tower,
- attaching the second nacelle compartment to a tower mount of the tower,
- lifting the first nacelle compartment to a position above the second nacelle compartment,
- attaching the first nacelle compartment on top of the second nacelle compartment, and
- attaching the third nacelle compartment to at least one of the first nacelle compartment, the second nacelle compartment, and an intersection between the first and the second nacelle compartments.

According to another embodiment, the attachment of the third nacelle compartment to one of the first nacelle compartment and the second nacelle compartment is done on the ground before lifting.

According to another embodiment, the method comprises:
- lifting the third nacelle compartment, and attaching the third nacelle compartment to at least one of the first nacelle compartment, the second nacelle compartment and the intersection between the first and the second nacelle compartments after attaching at least the second nacelle compartment to the tower mount of the tower.

According to another embodiment, the method comprises the steps:
- attaching a support structure to a rear end of at least one of the first nacelle compartment, the second nacelle compartment, and the intersection between the first and the second nacelle compartments, and
- attaching the third nacelle compartment to the support structure.

According to a further aspect of the present disclosure, another method of installing the nacelle, as explained above, on top of a tower of the wind turbine is described. The method comprises the steps of:
- lifting the first nacelle compartment to a position above the second nacelle compartment on ground,
- attaching the first nacelle compartment on top of the second nacelle compartment,
- lifting the first and the second nacelle compartments together on top of the tower,
- attaching the second nacelle compartment to a tower mount of the tower, and
- attaching the third nacelle compartment to at least one of the first nacelle compartment, the second nacelle compartment and an intersection between the first and the second nacelle compartments.

According to another embodiment, the method comprises the steps of:
- attaching a support structure to a rear end of at least one of the first nacelle compartment, the second nacelle compartment, and the intersection between the first and the second nacelle compartments, and
- attaching the third nacelle compartment to the support structure before lifting the first and the second nacelle compartments together on top of the tower, or after attaching the second nacelle compartment to the tower mount of the tower.

Further advantages, features and further developments are set out by the following exemplary embodiments, which are explained in conjunction with the attached figures. The same or similar elements or elements acting in the same way are provided with the same reference numerals in the following figures, even if they belong to different embodiments.
Figure 1 is a schematic showing the main components of a wind turbine;
Figure 2 shows, in perspective view, an exemplary nacelle of the wind turbine according to the embodiments of the present disclosure;
Figure 3 shows, in perspective view, an exemplary first nacelle compartment according to some embodiments of the present disclosure;
Figure 4 shows, in perspective view, an exemplary second nacelle compartment according to some embodiments of the present disclosure;
Figure 5 shows, in a side view, partially the first and second nacelle compartments, and a third nacelle compartment along with the further component supported on top in a first configuration, according to some embodiments of the disclosure;
Figure 6 shows, in a perspective view, partially the first and second nacelle compartments, and the third nacelle compartment along with the further component supported on top in a second configuration;
Figure 7 shows one side view of Figure 6;
Figure 8 shows another side view of Figure 6;
Figure 9 shows a rear view of Figure 6; and
Figure 10 shows, in a perspective view, partially the first and second nacelle compartments, and the third nacelle compartment along with the further component supported on top in an operating condition.

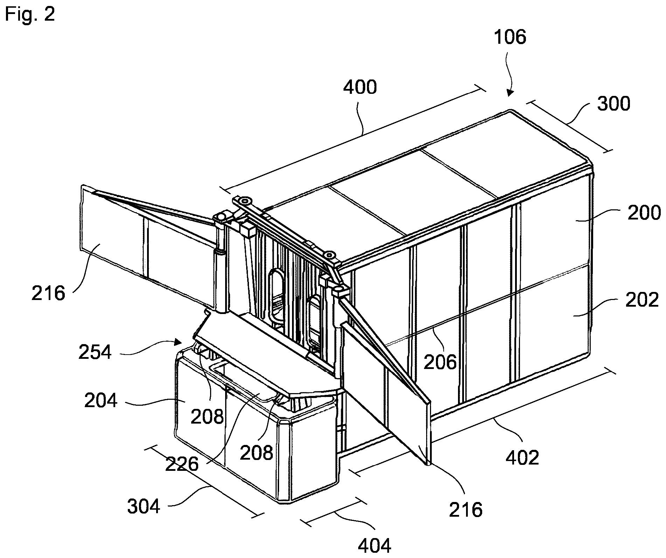

Figure 2 shows, in perspective view, a nacelle 106 for a wind turbine. The nacelle 106 comprises a first nacelle compartment 200, a second nacelle compartment 202 and a third nacelle compartment 204. The second nacelle compartment 202 is attached beneath and to the first nacelle compartment 200. According to this embodiment, the third nacelle compartment 204 is attached to the second nacelle compartment 202, particularly at the rear end 254 of the second nacelle compartment 202. The third nacelle compartment 204 can also be attached to the first nacelle compartment 200 or to an intersection 206 between the first nacelle compartment 200 and the second nacelle compartment 202. The intersection 206 may be formed from the interface between the first and second nacelle compartments. For example, the second nacelle compartment 202 is attached beneath the first nacelle compartment 200 through attaching means, e.g., fasteners, such that a top side (roof or surface) of the second nacelle compartment 202 forms said interface with a bottom side (base) of the first nacelle compartment 200.

According to one embodiment, a length or longitudinal dimension (considered along the lengthwise or longitudinal direction defined earlier) of the first nacelle compartment 200 and the second nacelle compartment 202 are equal or substantially equal. Thus, when the third nacelle compartment 204 is attached at the rear end 254, a length of the third nacelle compartment 204 extends beyond the length of the first nacelle compartment 200 and the second nacelle compartment 202.

The first nacelle compartment 200 is configured to accommodate at least an electrical generator (not shown in Figure 2), and the second nacelle compartment 202 is configured to at least accommodate one of a power converter or a transformer (also not shown in Figure 2). The third nacelle compartment 204 is configured to at least accommodate the other of the power converter and the transformer (also not shown in Figure 2).

The third nacelle compartment 204 arranged at the rear end 254 is configured to extend beyond the rear end 254 in at least one of lengthwise or longitudinal direction, as well as widthwise direction.

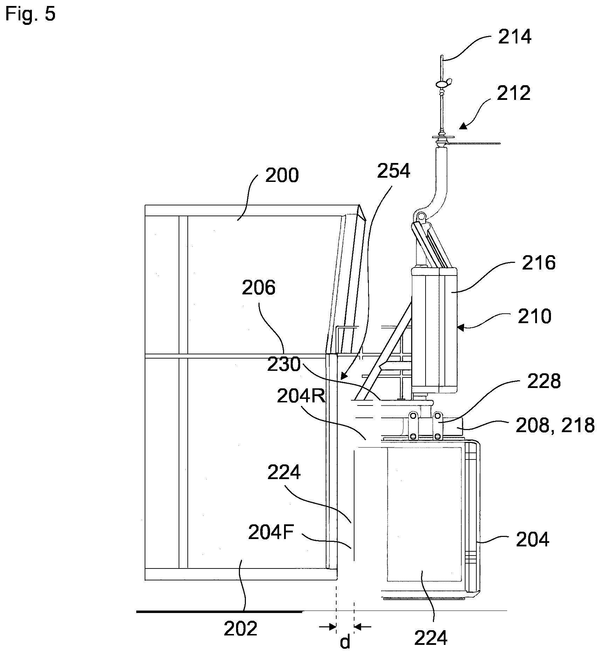

According to one embodiment, the third nacelle compartment 204 is arranged at a predefined distance "d" (see also Figure 5) from the rear end 254 of the second nacelle module or the first nacelle module 200, or the intersection 206. By this predefined distance "d" between the third nacelle compartment 204 and the back side (rear end 254) of the second nacelle compartment 202, a better cooling of the third nacelle compartment 204 is achieved as the wind can also circulate between the second nacelle compartment 202 and the third nacelle compartment 204, i.e., through the gap formed by the predefined distance "d". Further, the danger of arc flash is reduced.

As illustrated in Figure 5, an exemplary embodiment where a support structure 208 is attached on the rear side of the second nacelle compartment 202 is described. The third nacelle compartment 204 is attached to the support structure 208, for example, attached to an underside of the support structure 208 in a hung manner. The support structure 208 can also be attached to the back side of the first nacelle compartment 200 or the intersection 206 between the first nacelle compartment 200 and the second nacelle compartment 202.

According to an example, a dimension of the third nacelle compartment 204 may be predominant in the width or widthwise direction than its dimension in the lengthwise direction. Accordingly, a width dimension of the third nacelle compartment may be greater than the width of the first and the second nacelle compartments.

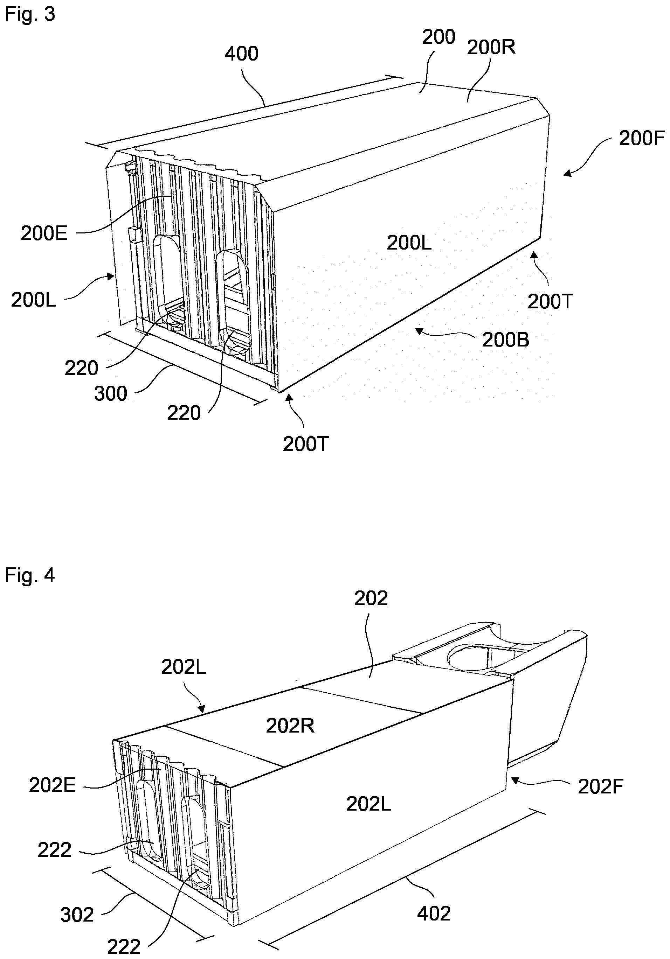

Figure 3 shows, in a perspective view, the first nacelle compartment 200 and Figure 4 shows, in a perspective view, the second nacelle compartment 202. As shown, the first and the second nacelle compartments may be attached such that a two-level or two-floor modular nacelle arrangement may be realized. The first nacelle compartment 200 is bound by a plurality of sides or faces. For instance, the first nacelle compartment 200 is bound by lateral sides (or walls) 200L, a top side 200R (or a roof), a bottom side 200B, a front or fore side 200F, and a rear side 200E. The lateral sides, top and bottom sides extend predominantly along the lengthwise direction, while the front side and the rear side extend perpendicular to the lengthwise direction.

The second nacelle compartment 202, for example, is bound by lateral sides (or walls) 202L, a top side 202R (or a roof), a bottom side 202B, a front or fore side 202F, and a rear side 202E. The lateral sides, top and bottom sides extend predominantly along the lengthwise direction, while the front side and the rear side extend perpendicular to the lengthwise direction.

To arrive at the two-level or two-floor modular nacelle arrangement, the bottom side 200B of the first nacelle compartment 200 may be mounted on and attached to the top side (or roof) 202R of the second nacelle compartment 202. The attachment may be realized at a plurality of locations at the interface 200T.

Such a configuration of the first and the second nacelle compartments 200, 202 connectable with each other may allow definition of standard connections, standard tooling, standard procedures/processes to be applied e.g., for manufacturing, and so on, to match or suit diverse wind turbine platforms or models.

Due to two-level or two floor compartmentalization, overall length of the nacelle 106 may be reduced in comparison to conventional single compartment nacelle. The reduction in the overall length may in turn be beneficial in arranging the inside components as close to tower as possible.

According to an example, both the first and the second nacelle compartments may be modelled as containers, e.g., shipping containers for sea transportation.

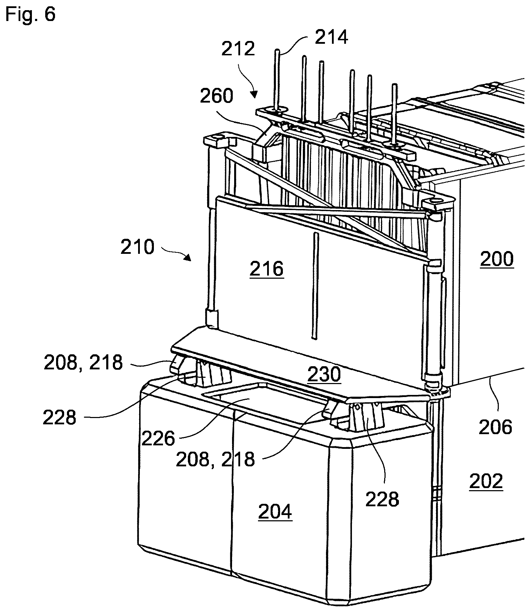

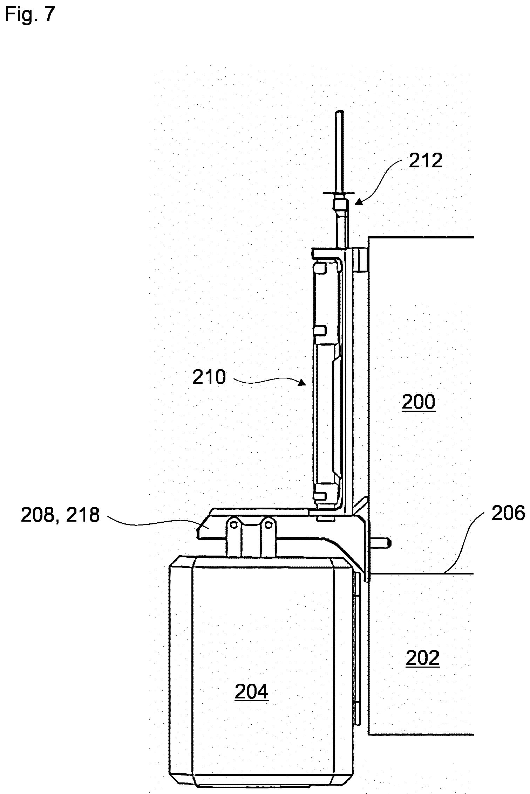

Figures 5 to 10 show several views of the nacelle 106 of the present disclosure illustrating a portion of the first and the second nacelle compartments 200, 202 and the third nacelle compartment 204 (in full) attached at the rear end 254. Figure 5 shows a side view of a first configuration of the further component 210, 212, while Figures 6-8 depict different views of the second configuration of the further component 210, 212 arranged on the third nacelle compartment 204.

Figures 5 to 10 also illustrate some configurations of exemplary support structures 208 configured to be attached to the rear side of the second nacelle compartment 202. The third nacelle compartment 204 may hang below the support structure 208 with a predefined distance d between the third nacelle compartment 204 and the rear side of the second nacelle compartment 202.

In another embodiment, the predefined distance d may be absent, i.e., a front side 204F of the third nacelle compartment 204 (best shown in Figure 5) may abut with the rear end 254 of the nacelle, e.g., the second nacelle compartment 202.

The support structure 208, according to one embodiment, is in the form of one or more beams 218 extending from the rear end 254 and also beyond the rear end 254 along the lengthwise direction, as shown in Figures 5 to 8, 10 as well as in Figure 2. The one or more beams 218 (alternately referred to as beam 218 type support structure 208) may be structurally supported by, for example, the supporting reinforcing structure (not shown) which may form part of framework or skeleton of the first and/or second nacelle compartments. As defined earlier, the supporting reinforcing structure may be of open type or closed type.

Considering the example of second nacelle compartment 202, the beam 218 type support structure 208 may simply be an (integral) extension of the supporting reinforcing structure inside the second nacelle compartment 202 to which the third nacelle compartment 204 is attached.

In another example, the beam 218 type support structure 208 may simply be attached, e.g., by fastening, welding, etc., to the supporting reinforcing structure inside the second nacelle compartment 202.

The beam type support structure 208 supporting the heavier third nacelle compartment 204 containing either the power converter or the transformer may be regarded as a cantilever beam arrangement.

Further, the third nacelle compartment 204 may be provisioned with connecting elements 228, e.g., clamps, brackets, etc., to attach to the beam 218 as illustrated in Figures 5 to 10, as well as Figure 2. The beam 218 may also support a support platform 230 for attaching or supporting further components e.g., cooling and/or sensing arrangement 210, 212 on top.

According to an embodiment, the first nacelle compartment 200 may be structurally reinforced or supported by a first supporting reinforcing structure (not shown), and the second nacelle compartment 202 may be structurally reinforced or supported by a second supporting reinforcing structure (not shown). The two supporting reinforcing structures arranged one above the other in their respective positions (corresponding to their nacelle compartments i.e., the first and the second nacelle compartments) may be connected to form a reinforcing interface region. The beam 218 type support structure may thus be formed integrally with this reinforcing interface region or connected at this reinforcing interface region, and thereby allows the third nacelle compartment 204 to be attached at the intersection 206 between both the nacelle compartments 200, 202. This way, the loads resulting from the third nacelle compartment 204 and the further components 210, 212 may be distributed between the two supporting reinforcing structures arranged one above the other via the beam 218 type support structure 218.

In other embodiments, other orientations of the beam 218 may be employed. For example, one or more beams extending along widthwise direction at the rear end 254 of the first and/or second nacelle compartment 200, 202, or at the intersection 206 may be configured to support the third nacelle compartment 204, e.g., at the front side 204F.

In another example, the third nacelle compartment 204 may be directly fixed or attached to the beams (not shown) - horizontal, vertical or otherwise forming part of the supporting reinforcing structure. For example, in case of vertically arranged first and second nacelle compartments with each compartment having a supporting reinforcing structure, then the one or more beams of this supporting reinforcing structure serve(s) as the support structure instead of a separate, external support structure.

Yet another example is that a cluster or a matrix of interconnected beams resulting in a frame (serving as a planar support structure) and externally connectable to the supporting reinforcing structure of the nacelle may be used to support the third nacelle compartment 204 either at the bottom (in a hung manner) or at the top.

Yet another example is that the support structure 208 is simply in the form of a plate or a platform that is connected to or integral with the rear end 254, e.g., with the supporting reinforcing structure of the first and/or second nacelle compartment 200, 202, or at the reinforcing interface.

A still another example is that the support structure 208 may be in the form of brackets, hooks, clamps, mounts or any other supporting member which may be reinforcingly fixed or fabricated integral with the supporting reinforcing structure. In such a case, the third nacelle compartment may be attached in a hung/suspended manner from such brackets, hooks, clamps, mounts or any other supporting member, or the front side 204F of the third nacelle compartment 204 may be directly attached to such brackets, hooks, clamps, mounts or any other supporting member. In an example, four brackets may be used to attach four corner portions of the front side 204F of the third nacelle compartment 204 with the rear end 254 of the first nacelle compartment 200, or the second nacelle compartment 202, or to both.

Further, as shown in any of the Figures 5 to 10, a further component e.g., a cooling 210 and/or a sensing arrangement 212 is located on the top side of the support structure 208. The cooling 210 and/or the sensing arrangement 212 may be preinstalled or pre-assembled as one module and could be mounted as one module on the support structure 208.

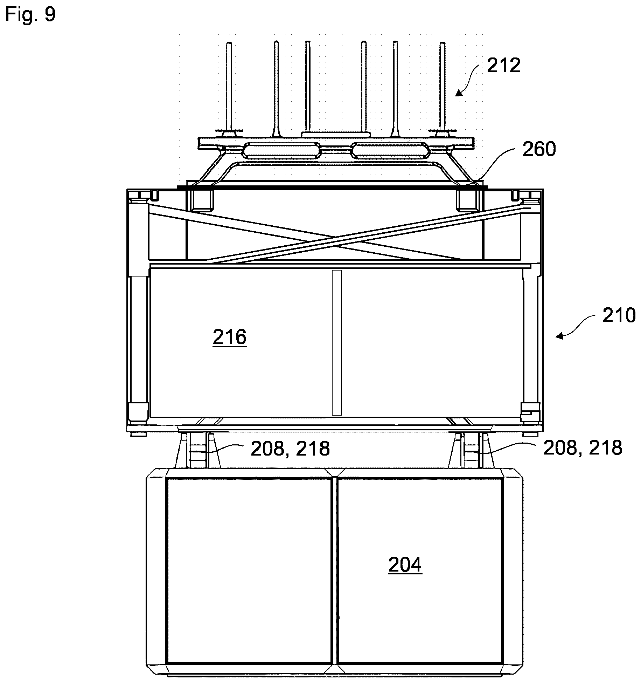

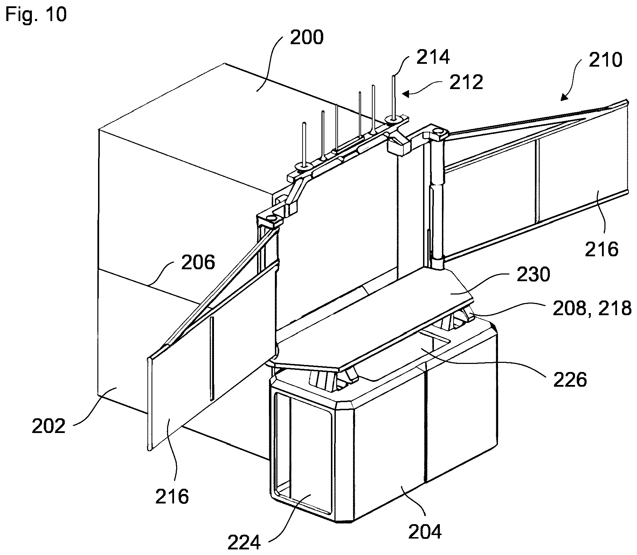

In the view of Figures 5 to 10, the sensing arrangement 212 shows sensors 214 which are unfolded so that they are directed vertically into the air for sensing parameters, including, but not limited to wind conditions. The sensing arrangement may be dismantled during a non-operating condition, e.g., transport, lifting, etc. The cooling arrangement 210, as best shown in Figure 10, depict cooling panels 216 which are also unfolded e.g., outwards in the widthwise direction for realizing at least one operating condition. In a non-operating condition, e.g., during transportation, the cooling panels 216 and also the sensors 214 can be folded inside as shown in Figures 6 and 9 so that the compact cooling arrangement 210 and the sensing arrangement 212 can be comfortably shipped as one module.

Figures 6 and 10 show, in a rear perspective view, partially the first and second nacelle compartments 200, 202 and the third nacelle compartment 204. The cooling panels 216 of the cooling arrangement 210 and the sensors 214 of the sensing arrangement 212 may be moved between unfolded and folded positions by means of a further support frame 260 attached above the support structure 208.

Referring to Figures 6 to 8 and 10, the beam 218 of the support structure 208 is configured to:
a) extend from the rear end 254 along the lengthwise direction, and
b) at least in a widthwise direction of the nacelle, such that
c) the widthwise dimension of the support beam is bigger than the lengthwise direction.

The support structure 208 supports, on its bottom side, the transformer or the power converter which are accommodated in the third nacelle compartment 204.

As can be seen in Figures 3 and 4, the first nacelle compartment comprises, on the rear end, two openings 220 and the second nacelle compartment 202 comprises two openings 222. Service personnel may have access to the top side 204R of the third nacelle compartment 204 through the openings 220 and can enter the third nacelle compartment through an opening 226 provided on the top side 204R of the third nacelle compartment 204. The openings 222 of the second nacelle compartment allow access to an opening 224 on the side of the third nacelle compartment 204.

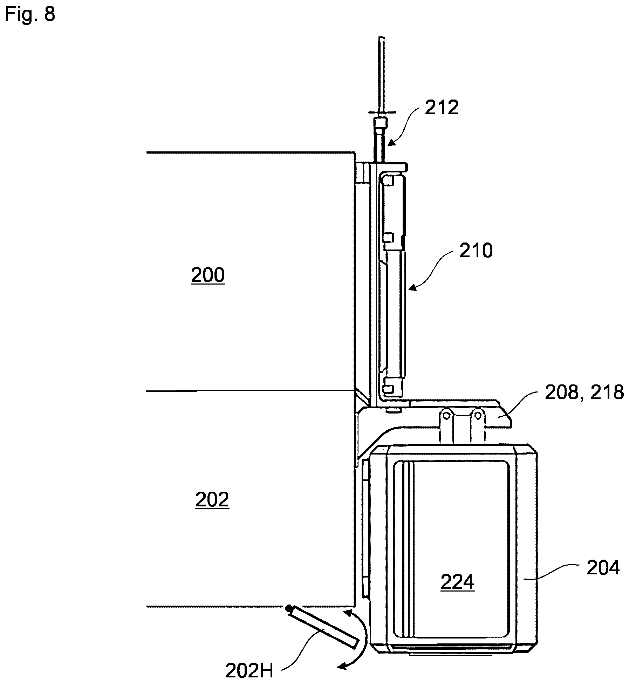

According to one example as illustrated by Figure 8, an underside of the second nacelle compartment 202 may be provided with a hatch or a grill 202H which may be opened, e.g., by means of hinges so that the hatch or the grill 202H may serve as a platform when opened, e.g., in the form of a ramp, leading to the third nacelle compartment 204. This allows movement of personnel, tools, etc., between the second and third nacelle compartments. For instance, if an opening is provided at the front side 204F of the third nacelle compartment 204 adjacent to the underside of the second nacelle compartment 202, the hatch or the grill 204H may serve as a ramp providing access from an interior of the second nacelle compartment 202 to an interior of the third nacelle compartment 204. Similar hatches or grills or platforms of any kind may be provided on other faces or walls, e.g., lateral side walls of the second as well as the first nacelle compartments 202, 200 that may lead to or provide access to the third nacelle compartment 204. The hatch or the grill 202H may be closed to serve the regular purpose.

In some examples, the first, second and third nacelle compartments 200, 202, 204 may be provided with extendible-retractable platforms, e.g., telescopic platforms which can be deployed from any of the side or face or wall of any of these nacelle compartments to gain access to other nacelle compartment(s).

In an example, the support structure 208 may also be comprise an extendible-retractable platforms, e.g., telescopic platforms which can be deployed from any side, e.g., in the widthwise direction.

As defined earlier, the nacelle 106 defines a lengthwise direction from the front end to the rear end and a widthwise direction perpendicular to the lengthwise direction.

According to an embodiment of the disclosure, the first nacelle compartment 200 has a first width extension 300 and a first length extension 400 (see Figures 2 and 3). The second nacelle compartment 202 has a second width extension 302 and a second length extension 402 (see Figures 2 and 4). The third nacelle compartment 204 has a third width extension 304 and a third length extension 404. According to one embodiment, the third width extension 304 is different, at least from one of the first width extension 300 and the second width extension 302. This embodiment is shown in Figures 2 and 10, where the third width extension 304 of the third nacelle compartment 204 is larger than the first width extension 300 of the first nacelle compartment 200 and/or the second width extension 302 of the second nacelle compartment 202. In this embodiment, the first and the second nacelle compartments 200, 202 have same or substantially same width extensions 300, 302.

According to another embodiment not shown in the drawing, the first, the second and the third length extensions 400, 402, 404 are different from each other, and the first, the second and the third width extensions 300, 302, 304 are different from each other such that, during at least one non-operational state, in particular during transportation and/or storage, at least one of:
- the third nacelle compartment 204 is configured to be accommodated in either of the first and the second nacelle compartment, and
- one of the first and second nacelle compartments is configured to be accommodated within the other of the first nacelle compartments.

Now different methods are described to install the nacelle on top of the tower according to some embodiments:
The first method according to an embodiment is to install the third nacelle compartment 204 with respect to the first or second nacelle compartment 200 or 202. In a first step, the second nacelle compartment 202 is lifted from ground to top of the tower 102. As described earlier, the second nacelle compartment 202 may be a main nacelle compartment comprising the main frame or the machine carrier which allows the second nacelle compartment 202 to be attached to a tower flange on top of the tower in a second step. This is followed by the third step of lifting the first nacelle compartment 200 from ground onto the tower, particularly to a position above the second nacelle compartment 202. Then, in a fourth step, the first nacelle compartment 200 is attached on top of the second nacelle compartment 202. The third nacelle compartment is attached to at least one of the first nacelle compartment 200, the second nacelle compartment 202, and the intersection 206.

In one embodiment, attaching the third nacelle compartment 204 to one of the first and the second nacelle compartments 200, 202 may be carried out on ground before lifting the second nacelle compartment 202 and the first nacelle compartment, e.g., before the first step.

In another embodiment, attaching the third nacelle compartment 204 at least one of the first, second nacelle compartments 200, 202 and the intersection 206 may be carried out after attaching the first nacelle compartment 200 on top of the second nacelle compartment 202, i.e., after the fourth step.

In yet another embodiment, attaching the third nacelle compartment to the second nacelle compartment 202 may be carried out after the second step but before the third step, i.e., after attaching the second nacelle compartment to the tower.

In the first method, attaching the third nacelle compartment to at least one of the first, second nacelle compartments 200, 202 and the intersection 206 comprises attaching the support structure 208 at the rear end 254.

The second method according to an embodiment is to install the third nacelle compartment 204 with respect to the first and/or second nacelle compartment 200 or 202, where the first and second nacelle compartments 200, 202 are lifted altogether as one assembly onto the top of the tower 102 of the wind turbine 100. The third nacelle compartment 204 may be attached to at least one of the first nacelle compartment 200, the second nacelle compartment 202 and the intersection 206 via the support structure 208 before lifting the first nacelle compartment 200 and the second nacelle compartment 202 together, or after attaching at least the second nacelle compartment to the tower.

The different options for installing the nacelle according to the invention on top of a tower of a wind turbine can be chosen depending on which equipment is available.

### Reference signs

- 100: wind turbine
- 102: tower
- 104: foundation
- 106: nacelle
- 108: rotor
- 110: rotor blade
- 112: rotor hub
- 200: first nacelle compartment
- 200L: lateral side(s) of the first nacelle compartment
- 200R: top side of the first nacelle compartment
- 200B: bottom side of the first nacelle compartment
- 200F: front side of the first nacelle compartment
- 200E: rear side of the first nacelle compartment200T interface
- 202: second nacelle compartment
- 202L: lateral side(s) of the second nacelle compartment
- 202R: top side of the second nacelle compartment
- 202B: bottom side of the second nacelle compartment
- 202F: front side of the second nacelle compartment
- 202E: rear side of the second nacelle compartment
- 202H: hatch or grill
- 204: third nacelle compartment
- 204R: top side of the third nacelle compartment
- 204F: front side of the third nacelle compartment
- 206: intersection
- 208: support structure
- 210: cooling arrangement
- 212: sensing arrangement
- 214: sensors
- 216: cooling panel
- 218: support beam
- 220: opening
- 222: opening
- 224: opening
- 226: opening
- 228: connecting elements
- 230: support platform
- 254: rear end of the nacelle
- 260: support frame
- 300: first width extension
- 302: second width extension
- 304: third width extension
- 400: first length extension
- 402: second length extension
- 404: third length extension

## Claims

1. A nacelle (106) for a wind turbine (100), comprising:
- a first nacelle compartment (200),
- a second nacelle compartment (202), and
- a third nacelle compartment (204),
wherein, the second nacelle compartment (202) is attached beneath the first nacelle compartment (200) and to the first nacelle compartment (200), and
the third nacelle compartment (204) is attached to at least one of the first nacelle compartment (200), the second nacelle compartment (202), and an intersection (206) between the first and the second nacelle compartments (200, 202),
wherein the first nacelle compartment (200) is configured to accommodate at least an electrical generator, and wherein the second nacelle compartment (202) is configured to at least accommodate one of a power converter or a transformer, and
wherein the third nacelle compartment (204) is configured to at least accommodate the other of the power converter and the transformer.

2. The nacelle according to claim 1, wherein the third nacelle compartment (204) is arranged at a rear end (254) and configured to extend beyond the rear end of at least one of the first nacelle compartment (200) and the second nacelle compartment (202).

3. The nacelle according to claim 1 or 2, wherein the third nacelle compartment (204) is arranged at a predefined distance (d) from the rear end (254) of at least one of the first nacelle compartment (200) and the second nacelle compartment (202).

4. The nacelle according to any of claims 1 to 3, wherein the nacelle (106) comprises a support structure (208) extending from a rear end (254) of at least one of the first nacelle compartment (200), the second nacelle compartment (202), and the intersection (206) between the first and the second nacelle compartments, and the third nacelle compartment (204) is attached to the support structure (208).

5. The nacelle according to claim 4, wherein the support structure (208) is configured to support further components on top, in particular at least one of a cooling arrangement (210) and a sensing arrangement (212) of the wind turbine (100).

6. The nacelle according to any of claims 4 to 5, wherein the support structure (208) is configured to support at its bottom side the transformer or the power converter accommodated in the third nacelle compartment (204).

7. The nacelle according to any of claims 1 to 6, wherein at least one of the first nacelle compartment (200) and the second nacelle compartment (202) comprises an opening (220, 222) configured to provide access to the third nacelle compartment (204).

8. The nacelle according to any of claims 1 to 7, wherein:
- the nacelle defines a widthwise direction,
- the first nacelle compartment (200) has a first width extension (300) in the widthwise direction,
- the second nacelle compartment (202) has a second width extension (302) in the widthwise direction, wherein the second width extension (302) is substantially equal to the first width extension (300), and
- the third nacelle compartment (204) has a third width extension (304) in the widthwise direction, wherein the third width extension (304) is different from at least one of the first width extension (300) and the second width extension (302).

9. The nacelle according to any of claims 1 to 7, wherein:
- the nacelle defines a lengthwise direction and a widthwise direction,
- the first nacelle compartment has a first length extension (400) in the lengthwise direction, and a first width extension (300) in the widthwise direction,
- the second nacelle compartment has a second length extension (402) in the lengthwise direction, and a second width extension (302) in the widthwise direction, and
- the third nacelle compartment has a third length extension (404) in the lengthwise direction, and a third width extension (304) in the widthwise direction,
- wherein the first, the second and the third length extensions (400, 402, 404) are different from each other, and the first, the second and the third width extensions (300, 302, 304) are different from each other, such that during at least one non-operational state, in particular during transportation and/or storage, at least one of:
- the third nacelle compartment (204) is configured to be accommodated in either of the first and the second nacelle compartment (200, 202), and
- one of the first and the second nacelle compartments (200, 202) is configured to be accommodated within the other of the first and the second nacelle compartment (200, 202).

10. A method of installing the nacelle of any of the claims 1 to 7 on top of a tower (102) of the wind turbine (100), the method comprising:
- lifting the second nacelle compartment (202) on top of the tower (102),
- attaching the second nacelle compartment (202) to a tower mount of the tower (102),
- lifting the first nacelle compartment (200) to a position above the second nacelle compartment (202),
- attaching the first nacelle compartment (200) on top of the second nacelle compartment (202), and
- attaching the third nacelle compartment (204) to at least one of the first nacelle compartment (200), the second nacelle compartment (202), and an intersection (206) between the first and the second nacelle compartments.

11. Method according to claim 10, wherein the method comprises attaching the third nacelle compartment (204) to one of the first nacelle compartment (200) and the second nacelle compartment (204) on ground before lifting.

12. Method according to claim 10, wherein the method comprises:
- lifting the third nacelle compartment (204), and
- attaching the third nacelle compartment (204) to at least one of the first nacelle compartment (200), the second nacelle compartment (202), and the intersection (206) between the first and the second nacelle compartments after attaching at least the second nacelle compartment (202) to the tower mount of the tower (102).

13. Method according to any one of claims 10 to 12, wherein the method comprises:
- attaching a support structure (208) to a rear end (254) of at least one of the first nacelle compartment (200), the second nacelle compartment (202), and the intersection (206) between the first and the second nacelle compartments, and
- attaching the third nacelle compartment (204) to the support structure (208).

14. A method of installing the nacelle of any of the claims 1 to 7 on top of a tower of the wind turbine, the method comprising:
- lifting the first nacelle compartment (200) to a position above the second nacelle compartment (202) on a ground,
- attaching the first nacelle compartment (200) on top of the second nacelle compartment (202),
- lifting the first and the second nacelle compartments (200, 202) together on top of the tower (102),
- attaching the second nacelle compartment (202) to a tower mount of the tower (102), and
- attaching the third nacelle compartment (204) to at least one of the first nacelle compartment (200), the second nacelle compartment (202), and an intersection (206) between the first and the second nacelle compartments.

15. The method according to claim 14, the method comprising:
- attaching a support structure (208) to a rear end (254) of at least one of the first nacelle compartment (200), the second nacelle compartment (202), and the intersection (206) between the first and the second nacelle compartments, and
- attaching the third nacelle compartment (204) to the support structure (208) before lifting the first and the second nacelle compartments (200, 202) together on top of the tower (102), or after the attaching of the second nacelle compartment (202) to the tower mount of the tower (102).
